# EUROPEAN PATENT APPLICATION

(11) **EP 4 790 828 A1**
(43) Date of publication of application: **12.08.2026**
(21) Application number: 24874445.0
(22) Date of filing: 12.09.2024
(51) Int. Cl.: H01M 50/593, H01M 50/204, H01M 50/224, H01M 50/227, H01M 50/231, H01M 50/50, H01M 50/505, H01M 50/569, H01M 50/588

(54) **BATTERY MODULE**

(30) Priority: 04.10.2023 JP 2023172623
(71) Applicant: AESC Japan Ltd., Yokohama-shi, Kanagawa 220-0012 (JP)
(72) Inventor: MONNO, Dai, Zama-shi, Kanagawa 252-0012 (JP); FU, Yongliang, Zama-shi, Kanagawa 252-0012 (JP); SHAO, Yongzheng, Zama-shi, Kanagawa 252-0012 (JP)
(74) Representative: Mathys & Squire
(86) International application number: PCT/JP2024/032654
(87) International publication number: WO 2025/074834

(57) **Abstract**

A battery module (100) includes a battery cell (110) including a positive electrode tab (114) or a negative electrode tab (116), and an accommodating body (200) that accommodates the battery cell (110). The accommodating body (200) includes a first metal portion (212) and a first resin portion (214) that is at least partially positioned between the battery cell (110) and the first metal portion (212). The first resin portion (214) includes a second resin protrusion (214c) that protrudes toward a first voltage detection terminal (132) electrically connected to the positive electrode tab (114) or the negative electrode tab (116).

## Description

### TECHNICAL FIELD

The present invention relates to a battery module.

### BACKGROUND ART

In recent years, various battery modules have been developed. The battery module includes a battery cell and an accommodating body that accommodates the battery cell.

Patent Document 1 discloses an example of a battery pack. The battery pack includes a battery unit, a positive total output terminal and a negative total output terminal that are electrically connected to the battery unit, and a holding body that holds the positive total output terminal and the negative total output terminal. The holding body has an uneven surface between the positive total output terminal and the negative total output terminal.

Patent Document 2 discloses an example of a fuel cell stack. The fuel cell stack includes a plurality of fuel cell power generation units arranged in a predetermined direction, a pair of terminal plates positioned on both sides of the plurality of fuel cell power generation units in the predetermined direction, a pair of insulating sheets positioned on both sides of the pair of terminal plates in the predetermined direction, and a pair of end plates positioned on both sides of the pair of insulating sheets in the predetermined direction. A bolt penetrates the plurality of fuel cell power generation units, the pair of terminal plates, the pair of insulating sheets, and the pair of end plates. The inner surface of a through-hole through which the bolt penetrates the insulating sheet has a step shape.

### RELATED DOCUMENT

### PATENT DOCUMENT

Patent Document 1: Japanese Unexamined Patent Publication No. 2007-220391
Patent Document 2: Japanese Unexamined Patent Publication No. 2020-170631

### SUMMARY OF THE INVENTION

### TECHNICAL PROBLEM

The accommodating body that accommodates the battery cell may include a conductive portion such as a metal plate. A conductive portion such as a tab of the battery cell or a conductive member electrically connected to the tab may be provided inside the accommodating body. When a voltage between the conductive portion of the accommodating body and the conductive portion inside the accommodating body is relatively high, it may be difficult to suppress discharge, such as creeping discharge or space discharge, between the conductive portion of the accommodating body and the conductive portion inside the accommodating body. When it is difficult to suppress the discharge between the conductive portion of the accommodating body and the conductive portion inside the accommodating body, it may be difficult to ensure electrical insulation between the battery cell and the accommodating body.

An example of the objects of the present invention is to ensure electrical insulation between the battery cell and the accommodating body. Other objects of the present invention will become apparent from the description of the present specification.

### SOLUTION TO PROBLEM

An aspect of the present invention is as follows.
1. A battery module including:
   a battery cell including an output terminal; and
   an accommodating body that accommodates the battery cell,
   in which the accommodating body includes a first conductive portion and an insulating portion that is at least partially located between the battery cell and the first conductive portion, and
   in which the insulating portion includes a protrusion that protrudes toward a second conductive portion including at least one of the output terminal and a conductive member electrically connected to the output terminal.
2. The battery module according to claim 1., in which the protrusion protrudes toward a portion of the second conductive portion located offset from an end of the second conductive portion toward a center of the second conductive portion.
3. The battery module according to 1. or 2., in which the insulating portion includes a resin portion including the protrusion and a heat-resistant portion located between the first conductive portion and the resin portion.
4. The battery module according to any one of 1. to 3., in which the second conductive portion includes a voltage detection terminal electrically connected to the output terminal.
5. A battery module including:
   a battery cell including an output terminal; and
   an accommodating body that accommodates the battery cell,
   in which the accommodating body includes a first conductive portion and an insulating portion that is at least partially located between the battery cell and the first conductive portion, and
   in which the insulating portion includes an uneven surface located between the first conductive portion and a second conductive portion including at least one of the output terminal and a conductive member electrically connected to the output terminal.
6. The battery module according to 5., in which the insulating portion includes a resin portion including the uneven surface and a heat-resistant portion located between the first conductive portion and the resin portion.
7. The battery module according to 5. or 6., in which the second conductive portion includes a voltage detection terminal electrically connected to the output terminal.

### ADVANTAGEOUS EFFECTS OF INVENTION

According to the aspect of the present invention, electrical insulation between the battery cell and the accommodating body can be ensured.

### BRIEF DESCRIPTION OF THE DRAWINGS

[FIG. 1] An exploded perspective view of a battery module according to an embodiment.
[FIG. 2] A front perspective view of a first plate according to the embodiment.
[FIG. 3] A rear perspective view of the first plate according to the embodiment.
[FIG. 4] A cross-sectional view of a position corresponding to a cross section taken along line A-A in FIG. 1 with the battery module assembled.
[FIG. 5] A diagram showing a first variant of FIG. 4.
[FIG. 6] A diagram showing a second variant of FIG. 4.
[FIG. 7] A cross-sectional view of a part of a battery module according to a variant.

### DESCRIPTION OF EMBODIMENTS

Hereinafter, embodiments and variants of the present invention will be described with reference to the drawings. In all drawings, the same constituent elements are denoted by the same reference signs, and detailed description thereof will not be repeated.

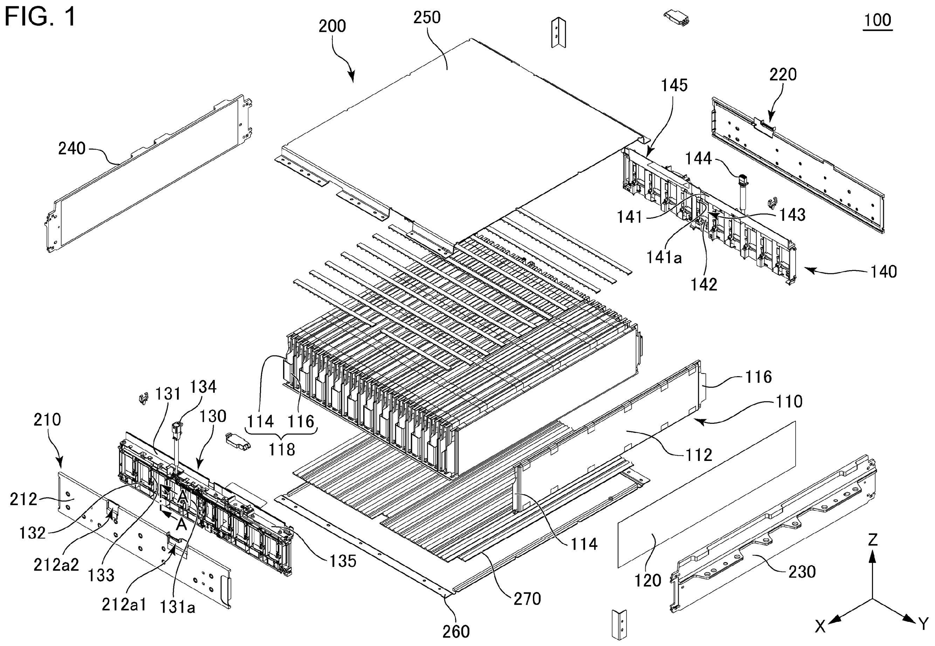

FIG. 1 is an exploded perspective view of battery module 100 according to the embodiment.

In each of the drawings, X direction, Y direction, and Z direction are illustrated for description. The X direction indicates a front-rear direction of battery module 100. The Y direction is orthogonal to the X direction. The Y direction indicates a left-right direction of battery module 100. The Z direction is orthogonal to both the X direction and the Y direction. The Z direction indicates an up-down direction of battery module 100. The arrow indicating the X direction, indicating the Y direction, and the arrow indicating the Z direction indicate a front direction, a left direction, and an upward direction of battery module 100, respectively. Hereinafter, the tip end side of the arrow indicating the X direction will be referred to as a +X side, and the side opposite to the tip end of the arrow indicating the X direction will be referred to as a -X side, the tip end side of the arrow indicating the Y direction will be referred to as a +Y side, and the side opposite to the tip end of the arrow indicating the Y direction will be referred to as a -Y side, the tip end side of the arrow indicating the Z direction will be referred to as a +Z side, and the side opposite to the tip end of the arrow indicating the Z direction will be referred to as a -Z side. The relationship between the X direction, the Y direction, and the Z direction and a front-rear direction, a left-right direction, and an up-down direction of battery module 100 is not limited to the above example.

The battery module 100 includes a plurality of battery cells 110, a plurality of compression pads 120, a first voltage detection device 130, a second voltage detection device 140, and the accommodating body 200.

The plurality of battery cells 110 and the plurality of compression pads 120 are alternately stacked in the Y direction. Each compression pad 120 is disposed between battery cells 110 adjacent to each other in the Y direction and on both sides of the plurality of battery cells 110 in the Y direction. Hereinafter, the plurality of battery cells 110 and the plurality of compression pads 120 alternately stacked in the Y direction will be referred to as a stack of battery cells 110, as necessary. A dimension of each battery cell 110 in the X direction is a dimension of each battery cell 110 in a longitudinal direction. A dimension of each battery cell 110 in the Z direction is a dimension of each battery cell 110 in a transverse direction. A dimension of each battery cell 110 in the Y direction is a dimension of each battery cell 110 in a thickness direction. A shape of each battery cell 110 is not limited to this example.

Each battery cell 110 includes a battery element (not shown), the exterior material 112, the positive electrode tab 114, and the negative electrode tab 116. In an example, the battery element includes a plurality of positive electrodes and a plurality of negative electrodes (not shown) that are alternately stacked in the Y direction, and a separator (not shown) that is positioned between the positive electrode and the negative electrode adjacent to each other in the Y direction. The exterior material 112 seals the battery element and an electrolytic solution (not shown). The positive electrode tab 114 is electrically connected to the positive electrode of the battery element. The positive electrode tab 114 is led out from one side of the exterior material 112 in the X direction. The negative electrode tab 116 is electrically connected to the negative electrode of the battery element. The negative electrode tab 116 is led out from the other side of the exterior material 112 in the X direction. However, a structure of each battery cell 110 is not limited to this example. For example, in the embodiment, the output terminal of each battery cell 110 is the positive electrode tab 114 or the negative electrode tab 116. A potential of the battery element included in the battery cell 110 is output from the output terminal of each battery cell 110. However, the output terminal of each battery cell 110 is not limited to the tab such as the positive electrode tab 114 and the negative electrode tab 116.

Each battery cell 110 may be a solid-state battery. In the solid-state battery, a solid electrolyte layer is provided at a portion corresponding to the separator. The solid-state battery does not include the electrolyte. Hereinafter, the battery cell 110 will be described as a battery cell including an electrolyte unless otherwise specified.

The plurality of battery cells 110 is electrically connected in a combination of series and parallel. Specifically, a cell group including at least two battery cells 110 that are adjacent to each other in the Y direction and are connected in parallel is stacked in the Y direction and is connected in series. On the +X side of the stack of battery cells 110, the positive electrode tab 114 led out from the battery cell 110 of one cell group connected in parallel and the negative electrode tab 116 led out from the battery cell 110 of the other cell group connected in parallel are electrically connected to each other, and the tab group 118 including the positive electrode tab 114 and the negative electrode tab 116 is positioned. The positive electrode tab 114 and the negative electrode tab 116 in the tab group 118 are joined to each other, for example, by laser welding. The tab group 118 is also positioned on the -X side of the stack of battery cells 110. Therefore, the plurality of cell groups is connected in series from the cell group positioned on one end side of the stack of battery cells 110 in the Y direction to the cell group positioned on the other end side of the stack of battery cells 110 in the Y direction. Hereinafter, the tab group 118 positioned on the +X side of the stack of battery cells 110 will be referred to as a +X side tab group 118, and the tab group 118 positioned on the -X side of the stack of battery cells 110 will be referred to as a -X side tab group 118, as necessary.

Electrical connection of the plurality of battery cells 110 is not limited to the above example. For example, a single battery cell 110 may be connected in series to constitute the stack of battery cells 110.

The first voltage detection device 130 detects a voltage of the plurality of +X side tab groups 118. The first voltage detection device 130 includes the first protector 131, a plurality of first voltage detection terminals 132, a plurality of first voltage detection lines 133, the first connector 134, and a first bus bar 135.

The first protector 131 covers the +X side portion of the stack of battery cells 110. The first protector 131 is, for example, an insulator such as a resin. The first protector 131 defines a plurality of first openings 131a. Each of the plurality of +X side tab groups 118 is exposed to the +X side through each of the plurality of first openings 131a.

Each of the plurality of first voltage detection terminals 132 is positioned on the +X side of each of the plurality of +X side tab groups 118. Each first voltage detection terminal 132 is, for example, a conductive member such as a metal. The -X side surface of each first voltage detection terminal 132 and the +X side surface of each +X side tab group 118 are joined to each other by a joining method such as laser welding. Therefore, each first voltage detection terminal 132 and each +X side tab group 118 are electrically connected to each other. Therefore, first voltage detection device 130 can detect the voltage of each +X side tab group 118 by each first voltage detection terminal 132. The plurality of first voltage detection terminals 132 is integrally held by the first protector 131. Therefore, by appropriately positioning the first protector 131 with respect to the stack of battery cells 110, each of the plurality of first voltage detection terminals 132 can be appropriately positioned with respect to each of the plurality of +X side tab groups 118.

One end of each first voltage detection line 133 and each first voltage detection terminal 132 are electrically connected to each other. The other end of each first voltage detection line 133 and the first connector 134 are electrically connected to each other. Therefore, the plurality of first voltage detection terminals 132 and the first connector 134 are electrically connected to each other through the plurality of first voltage detection lines 133. Each first voltage detection line 133 is routed through the first protector 131 between one end of each first voltage detection line 133 and the other end of each first voltage detection line 133.

First bus bar 135 is disposed at the +Y side end portion of the first protector 131. First bus bar 135 is electrically connected to the positive electrode tab 114 led out to +X side from the battery cell 110 of the cell group positioned at the +Y side end portion of the stack of battery cells 110. The first bus bar 135 functions as an external terminal for electrically connecting the battery module 100 to another battery module or an external device.

The second voltage detection device 140 detects a voltage of the plurality of -X side tab groups 118. The second voltage detection device 140 includes a second protector 141, a plurality of second voltage detection terminals 142, a plurality of second voltage detection lines 143, a second connector 144, and a second bus bar 145.

The second protector 141 covers the -X side portion of the stack of battery cells 110. The second protector 141 is, for example, an insulator such as a resin. The second protector 141 defines a plurality of second openings 141a. Each of the plurality of -X side tab groups 118 is exposed to the -X side through each of the plurality of second openings 141a.

Each of the plurality of second voltage detection terminals 142 is positioned on the -X side of each of the plurality of -X side tab groups 118. Each second voltage detection terminal 142 is, for example, a conductive member such as a metal. The +X side surface of each second voltage detection terminal 142 and the -X side surface of each -X side tab group 118 are joined to each other by a joining method such as laser welding. Therefore, each second voltage detection terminal 142 and each -X side tab group 118 are electrically connected to each other. Therefore, second voltage detection device 140 can detect the voltage of each -X side tab group 118 by each second voltage detection terminal 142. The plurality of second voltage detection terminals 142 is integrally held by the second protector 141. Therefore, by appropriately positioning second protector 141 with respect to the stack of battery cells 110, each of the plurality of second voltage detection terminals 142 can be appropriately positioned with respect to each of the plurality of -X side tab groups 118.

One end of each second voltage detection line 143 and each second voltage detection terminal 142 are electrically connected to each other. The other end of each second voltage detection line 143 and the second connector 144 are electrically connected to each other. Therefore, the plurality of second voltage detection terminals 142 and the second connector 144 are electrically connected to each other through the plurality of second voltage detection lines 143. Each second voltage detection line 143 is routed through the second protector 141 between one end of each second voltage detection line 143 and the other end of each second voltage detection line 143.

The second bus bar 145 is disposed at the -Y side end portion of the second protector 141. The second bus bar 145 is electrically connected to the negative electrode tab 116 led out to the -X side from the battery cell 110 of the cell group positioned at the -Y side end portion of the stack of battery cells 110. The second bus bar 145 functions as an external terminal for electrically connecting the battery module 100 to another battery module or an external device.

In the example shown in FIG. 1, the positive electrode tab 114 of the terminal of the plurality of cell groups connected in series is led out to the +X side from the battery cell 110 of the cell group positioned at the +Y side end portion of the stack of battery cells 110, and the negative electrode tab 116 of the terminal of the plurality of cell groups connected in series is led out to the -X side from the battery cell 110 of the cell group positioned at the -Y side end portion of the stack of battery cells 110. Therefore, the first bus bar 135 is disposed on the +X side and the +Y side with respect to the stack of battery cells 110, and the second bus bar 145 is disposed on the -X side and the -Y side with respect to the stack of battery cells 110. However, the disposition of the positive electrode tab 114 and the negative electrode tab 116 of the terminal of the plurality of cell groups connected in series may be different depending on the number of battery cells 110 included in the stack of battery cells 110. For example, the positive electrode tab 114 of the terminal of the plurality of cell groups connected in series may be led out to the +X side from the battery cell 110 of the cell group positioned at the +Y side end portion of the stack of battery cells 110, and the negative electrode tab 116 of the terminal of the plurality of cell groups connected in series may be led out to the +X side from the battery cell 110 of the cell group positioned at the -Y side end portion of the stack of battery cells 110. In this case, the first bus bar 135 is disposed on the +X side and the +Y side with respect to the stack of battery cells 110, and the second bus bar 145 is disposed on the +X side and the -Y side with respect to the stack of battery cells 110.

The accommodating body 200 includes a first plate 210, a second plate 220, a third plate 230, a fourth plate 240, a fifth plate 250, and a sixth plate 260.

The first plate 210 covers the +X side portion of the stack of battery cells 110 and the +X side portion of the first voltage detection device 130. The second plate 220 covers the -X side portion of the stack of battery cells 110 and the -X side portion of the second voltage detection device 140. The third plate 230 covers the +Y side portion of the stack of battery cells 110. The fourth plate 240 covers the -Y side portion of the stack of battery cells 110. The fifth plate 250 covers the +Z side portion of the stack of battery cells 110. The sixth plate 260 covers the -Z side portion of the stack of battery cells 110. A thermally conductive adhesive 270 is disposed between the +Z side surface of the sixth plate 260 and the -Z side surface of the stack of battery cells 110. Therefore, heat generated from the stack of battery cells 110 can be dissipated downward from the battery module 100 through thermally conductive adhesive 270.

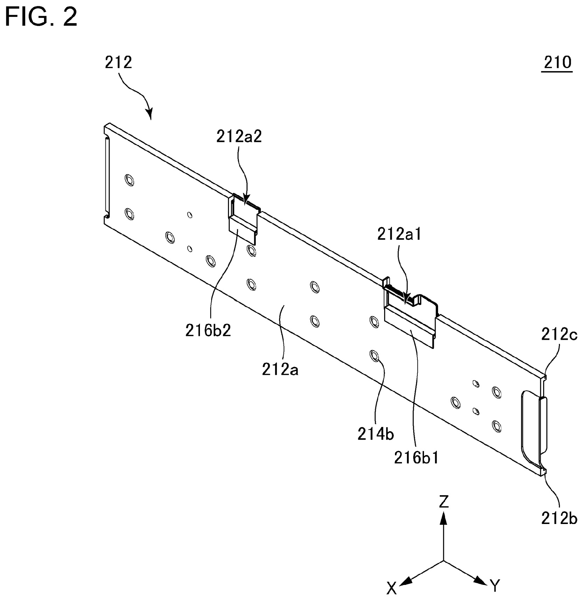

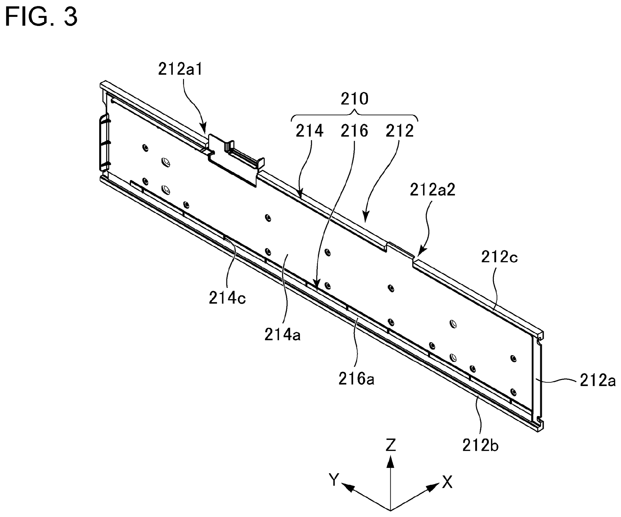

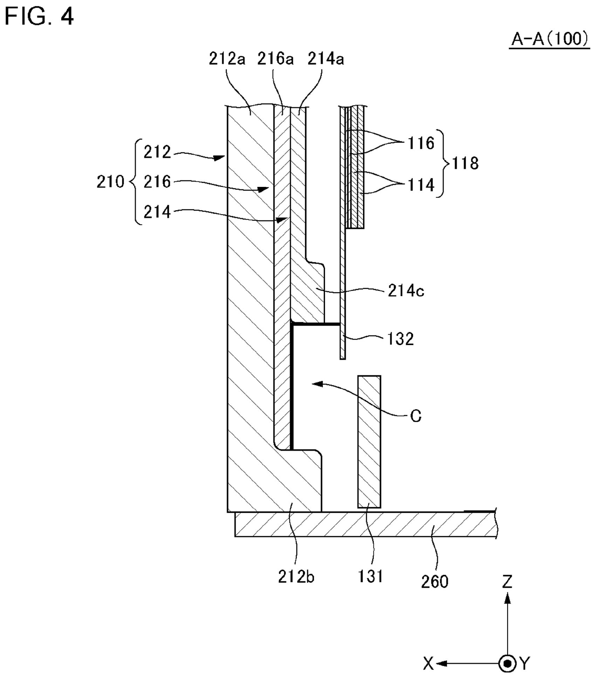

FIG. 2 is a front perspective view of the first plate 210 according to the embodiment. FIG. 3 is a rear perspective view of the first plate 210 according to the embodiment. FIG. 4 is a cross-sectional view of a position corresponding to a cross section taken along line A-A in FIG. 1 with the battery module 100 assembled.

The first plate 210 according to the embodiment will be described with reference to FIGS. 2 to 4 as necessary, and with reference to FIG. 1 as necessary. The following description of the first plate 210 according to the embodiment can be similarly applied to the second plate 220 according to the embodiment.

As shown in FIGS. 2 to 4, the first plate 210 includes a first metal portion 212, a first resin portion 214, and a first fireproof portion 216. The first metal portion 212 includes a first metal plate 212a, a first metal protrusion 212b, and a second metal protrusion 212c. The first metal plate 212a defines a first notch 212a1 and a second notch 212a2. The first resin portion 214 includes a first resin plate 214a, a plurality of first resin protrusions 214b, and a plurality of second resin protrusions 214c. The first fireproof portion 216 includes a first fireproof sheet 216a, a first fireproof extending sheet 216b1, and a second fireproof extending sheet 216b2.

The first metal portion 212 is a conductive portion. The first metal portion 212 is made of, for example, a metal such as aluminum or stainless steel. The rigidity of the first metal portion 212 can be higher than the rigidity of the resin. Therefore, when the first plate 210 includes the first metal portion 212, the strength of the first plate 210 can be improved as compared with a case where the first plate 210 consists of only the resin without including the first metal portion 212.

The first metal plate 212a has a thickness that is substantially parallel to the X direction. Specifically, the first metal plate 212a has a substantially rectangular shape having a pair of long sides substantially parallel to the Y direction and a pair of short sides substantially parallel to the Z direction, except for the first notch 212a1 and the second notch 212a2.

As shown in FIG. 2, the first notch 212a1 is positioned on the +Y side portion of the +Z side long side of the first metal plate 212a . As shown in FIGS. 1 and 2, a space defined by the first notch 212a1 and the first bus bar 135 at least partially overlap with each other in the X direction. The first bus bar 135 is a conductive member electrically connected to the battery cell 110. Therefore, electrical insulation between the first metal plate 212a and the first bus bar 135 can be ensured as compared to a case where the first metal plate 212a does not define the first notch 212a1.

As shown in FIG. 2, the second notch 212a2 is positioned on the -Y side portion of the +Z side long side of the first metal plate 212a. As shown in FIGS. 1 and 2, a space defined by the second notch 212a2 and the first connector 134 at least partially overlap with each other in the X direction. The first connector 134 is a conductive member electrically connected to the battery cell 110. Therefore, electrical insulation between the first metal plate 212a and the first connector 134 can be ensured as compared to a case where the first metal plate 212a does not define the second notch 212a2.

The first metal plate 212a may define a notch instead of or in addition to the first notch 212a1 and the second notch 212a2. A space defined by the notch and a conductive member electrically connected to the battery cell 110 may partially overlap each other in the X direction. When the space and the conductive member partially overlap each other in the X direction, electrical insulation between the first metal plate 212a and the conductive member can be ensured as compared to a case where the first metal plate 212a does not define the notch.

The first metal protrusion 212b is positioned at the -Z side end portion of the -X side surface of the first metal plate 212a. The first metal protrusion 212b protrudes toward the -X side. The first metal protrusion 212b extends along the -Z side of the first metal plate 212a. The first metal plate 212a and the first metal protrusion 212b are integrated.

The second metal protrusion 212c is positioned at the +Z side end portion of the -X side surface of the first metal plate 212a. The second metal protrusion 212c protrudes toward the -X side. The second metal protrusion 212c extends along the +Z side of the first metal plate 212a, except for the first notch 212a1 and the second notch 212a2. The first metal plate 212a and the second metal protrusion 212c are integrated.

The first resin portion 214 is an insulating portion. The first resin portion 214 is made of, for example, a resin such as polypropylene (PP).

The first resin plate 214a has a thickness substantially parallel to the X direction. Specifically, the first resin plate 214a has a substantially rectangular shape having a pair of long sides substantially parallel to the Y direction and a pair of short sides substantially parallel to the Z direction. As shown in FIGS. 3 and 4, the -Z side long side of the first resin plate 214a and the +Z side surface of the first metal protrusion 212b are spaced apart from each other in the Z direction. Therefore, a part of the first fireproof sheet 216a described below is exposed to the -X side between the -Z side long side of the first resin plate 214a and the +Z side surface of the first metal protrusion 212b.

The first resin plate 214a has electrically insulating properties. The first resin plate 214a covers substantially the entire -X side surface of the first metal portion 212. Therefore, the first resin plate 214a is at least partially positioned between the -X side surface of the first metal plate 212a and the +X side surface of each of the +X side tab group 118, the first voltage detection terminal 132, and the first bus bar 135 in the X direction. Therefore, the short-circuit between the first metal plate 212a and each of the +X side tab group 118, the first voltage detection terminal 132, and the first bus bar 135 can be suppressed by the first resin plate 214a.

The plurality of first resin protrusions 214b is provided on the +X side surface side of the first resin plate 214a. For example, the first resin plate 214a and the plurality of the first resin protrusions 214b are integrally formed by resin molding. The first metal plate 212a and the first resin plate 214a are joined to each other by heat staking of the plurality of first resin protrusions 214b while the first fireproof sheet 216a described below is at least partially disposed between the -X side surface of the first metal plate 212a and the +X side surface of the first resin plate 214a. Specifically, when the first metal plate 212a and the first resin plate 214a are joined to each other, each first resin protrusion 214b penetrates a through-hole provided in the first fireproof sheet 216a and a through-hole provided in the first metal plate 212a in the X direction. A dimension of each first resin protrusion 214b in a direction perpendicular to the X direction at the +X side end portion is larger than a dimension of the through-hole provided in the first metal plate 212a in the direction perpendicular to the X direction by heat staking of the +X side end portion of each first resin protrusion 214b. Therefore, the first metal plate 212a and the first resin plate 214a are joined to each other to prevent the first metal plate 212a from coming off toward the +X side with respect to the first resin plate 214a. However, the bonding method of the first metal plate 212a and the first resin plate 214a is not limited to heat staking of the +X side end portion of each first resin portion 214.

The plurality of second resin protrusions 214c is provided on the -X side surface side of the first resin plate 214a. For example, the first resin plate 214a and the plurality of second resin protrusions 214c are integrally formed by resin molding. When the first plate 210 covers the +X side portion of the stack of battery cells 110 and the +X side portion of the first voltage detection device 130, the -X side surface of each second resin protrusion 214c and the +X side surface of each first voltage detection terminal 132 face each other in the X direction. A single second resin protrusion 214c extending in the Y direction may be provided instead of the plurality of second resin protrusions 214c. When the single second resin protrusion 214c is provided, the -X side surface of the second resin protrusion 214c and the +X side surface of each first voltage detection terminal 132 face each other in the X direction with the first plate 210 covering the +X side portion of the stack of battery cells 110 and the +X side portion of the first voltage detection device 130.

The formability of the first resin portion 214 is higher than the formability of the first fireproof portion 216. Therefore, in the embodiment, the degree of freedom of the shape of the first plate 210 on the -X side can be improved as compared with a case where the first plate 210 does not include the first resin portion 214. However, the first plate 210 may include the first metal portion 212 and the first fireproof portion 216 without including the first resin portion 214.

The first fireproof portion 216 is an insulating portion. The first fireproof portion 216 includes, for example, a fireproof material such as a silicon fiber.

The first fireproof sheet 216a has a thickness substantially parallel to the X direction. Specifically, the first resin plate 214a has a substantially rectangular shape having a pair of long sides substantially parallel to the Y direction and a pair of short sides substantially parallel to the Z direction, except for the first fireproof extending sheet 216b1 and the second fireproof extending sheet 216b2.

The first fireproof sheet 216a has electrically insulating properties. The first fireproof sheet 216a covers substantially the entire -X side surface of the first metal portion 212, except for the first metal protrusion 212b and the second metal protrusion 212c. Therefore, the first fireproof sheet 216a is at least partially positioned between the -X side surface of the first metal plate 212a and the +X side surface of each of the +X side tab group 118, the first voltage detection terminal 132, and the first bus bar 135 in the X direction. Therefore, the short-circuit between the first metal plate 212a and each of the +X side tab group 118, the first voltage detection terminal 132, and the first bus bar 135 can be suppressed by the first fireproof sheet 216a.

The first fireproof sheet 216a may not cover substantially the entire -X side surface of the first metal plate 212a. For example, the first fireproof sheet 216a may partially cover a portion of the -X side surface of the first metal plate 212a that overlaps each of the +X side tab group 118, the first voltage detection terminal 132, and the first bus bar 135 in the X direction. When the first fireproof sheet 216a partially covers the portion of the -X side surface of the first metal plate 212a, the short-circuit between the first metal plate 212a and each of the +X side tab group 118, the first voltage detection terminal 132, and the first bus bar 135 can be suppressed by the first fireproof sheet 216a. When the first fireproof sheet 216a partially covers the -X side surface of the first metal plate 212a, the material cost of the first fireproof sheet 216a can be reduced as compared to a case where the first fireproof sheet 216a covers substantially the entire -X side surface of the first metal plate 212a.

The first fireproof sheet 216a is disposed between the +Z side surface of the first metal protrusion 212b and the -Z side surface of the second metal protrusion 212c. Therefore, the -Z side end portion of the first fireproof sheet 216a can be less likely to enter a gap between the -Z side end portion of the first plate 210 and the +Z side surface of the +X side end portion of the sixth plate 260. Therefore, the -Z side end portion of the first fireproof sheet 216a can be more reliably joined to the -Z side end portion of the first plate 210 and the +X side end portion of the sixth plate 260 by a bonding method such as laser welding as compared to a case where the -Z side end portion of the first fireproof sheet 216a enters the gap. Similarly, the +Z side end portion of the first fireproof sheet 216a can be less likely to enter a gap between the +Z side end portion of the first plate 210 and the +Z side surface of the +X side end portion of the fifth plate 250. Therefore, the +Z side end portion of the first fireproof sheet 216a can be more reliably joined to the +Z side end portion of the first plate 210 and the +X side end portion of the fifth plate 250 by a bonding method such as laser welding as compared to a case where the +Z side end portion of the first fireproof sheet 216a enters the gap.

As shown in FIG. 2, the first fireproof extending sheet 216b1 is folded toward the -Z side when at least a part of the first fireproof extending sheet 216b1 covers at least a part of an edge of the first notch 212a1 of the first metal plate 212a. In the example shown in FIG. 2, the first fireproof extending sheet 216b1 covers an edge of the first metal plate 212a that faces the +Z side of the first notch 212a1. Therefore, electrical insulation between the first metal plate 212a and a conductive member disposed around the first notch 212a1 can be ensured as compared to a case where the first fireproof extending sheet 216b1 does not cover the edge of the first metal plate 212a. For example, a connection bus bar (not shown) that electrically connects the first bus bar 135 and a bus bar of an external device such as another battery module to each other may be disposed around the first notch 212a1. In the embodiment, even if the connection bus bar falls toward the edge of the first metal plate 212a, the short-circuit between the connection bus bar and the first metal plate 212a can be suppressed by the first fireproof extending sheet 216b1.

As shown in FIG. 2, the second fireproof extending sheet 216b2 is folded toward the -Z side when at least a part of the second fireproof extending sheet 216b2 covers at least a part of an edge of the second notch 212a2 of the first metal plate 212a. In the example shown in FIG. 2, the second fireproof extending sheet 216b2 covers an edge of the first metal plate 212a that faces the +Z side of the second notch 212a2. Therefore, electrical insulation between the first metal plate 212a and a conductive member disposed around the second notch 212a2 can be ensured as compared to a case where the second fireproof extending sheet 216b2 does not cover the edge of the first metal plate 212a. For example, a harness (not shown) that is electrically connected to the first connector 134 may be disposed around the second notch 212a2. In the embodiment, even if the harness falls toward the edge of the first metal plate 212a, the short-circuit between the harness and the first metal plate 212a can be suppressed by the second fireproof extending sheet 216b2.

In the embodiment, first fireproof portion 216 covers at least a part of an edge of the first notch 212a1, second notch 212a2, or the like of the first metal plate 212a. However, first fireproof portion 216 may cover at least a part of an edge of the first metal plate 212a different from the edge of the notch. For example, the first fireproof portion 216 may cover at least a part of the edge of the first metal plate 212a when the first metal plate 212a does not define the notch. When the first fireproof portion 216 covers at least a part of the edge of the first metal plate 212a, electrical insulation between the first metal plate 212a and a conductive member disposed around a portion of the edge of the first metal plate 212a covered by the first fireproof portion 216 can be ensured as compared to a case where the first fireproof portion 216 does not cover any portion of the edge of the first metal plate 212a.

The first fireproof portion 216 is a heat-resistant portion having relatively high heat resistance. The heat resistance of the first fireproof portion 216 is such that the electrical insulation of the first fireproof portion 216 is maintained, for example, after the first fireproof portion 216 is exposed to 800 °C for 10 minutes and preferably exposed to 1000 °C for 10 minutes. In the embodiment, even if abnormal heat generation occurs in the battery cell 110, the heat resistance of the first fireproof portion 216 can prevent the first fireproof portion 216 from melting easily. Therefore, even if the first resin portion 214 is melted by abnormal heat generation of the battery cell 110, the first fireproof portion 216 can be prevented from melting easily. Therefore, even if the first resin portion 214 is melted by abnormal heat generation of the battery cell 110, the first fireproof portion 216 can suppress short-circuiting between first metal portion 212 and each of the +X side tab group 118, the first voltage detection terminal 132, and the first bus bar 135.

In an example, the heat resistance of the first fireproof portion 216 is higher than the heat resistance of the first resin portion 214. When the heat resistance of the first fireproof portion 216 is higher than the heat resistance of the first resin portion 214, the first fireproof portion 216 can be made more difficult to melt than the first resin portion 214 even if abnormal heat generation occurs in the battery cell 110.

The first fireproof portion 216 further has relatively high fire resistance. The fire resistance is determined by a time required for a flame to burn a member. The longer the time required for the flame to burn the member, the higher the fire resistance, and the shorter the time required for the flame to burn the member, the lower the fire resistance. In the embodiment, even if abnormal heat generation occurs in the battery cell 110, the fire resistance of the first fireproof portion 216 can prevent the first fireproof portion 216 from melting easily. Therefore, even if the first resin portion 214 is melted by abnormal heat generation of the battery cell 110, the first fireproof portion 216 can be prevented from melting easily. Therefore, even if the first resin portion 214 is melted by abnormal heat generation of the battery cell 110, the first fireproof portion 216 can suppress short-circuiting between first metal portion 212 and each of the +X side tab group 118, the first voltage detection terminal 132, and the first bus bar 135.

In an example, the fire resistance of the first fireproof portion 216 is higher than the fire resistance of the first resin portion 214. When the fire resistance of the first fireproof portion 216 is higher than the fire resistance of the first resin portion 214, the first fireproof portion 216 can be made more difficult to melt than the first resin portion 214 even if abnormal heat generation occurs in the battery cell 110.

The first fireproof portion 216 may or may not have flame retardancy. When the first fireproof portion 216 has flame retardancy, the first fireproof portion 216 may melt without burning at a temperature higher than a heat resistance temperature of the first fireproof portion 216. When the first fireproof portion 216 does not have flame retardancy, the first fireproof portion 216 may burn and melt at a temperature higher than a heat resistance temperature of the first fireproof portion 216.

The first plate 210 may include a heat-resistant portion instead of the first fireproof portion 216. The heat-resistant portion may or may not have flame retardancy. When the first plate 210 includes the heat-resistant portion, the heat resistance of the heat-resistant portion can prevent the heat-resistant portion from melting easily even if abnormal heat generation occurs in the battery cell 110.

The electrical insulation between the first metal portion 212 and the first voltage detection terminal 132 will be described with reference to FIG. 4. In the example shown in FIG. 4, the first voltage detection terminal 132 is a conductive member electrically connected to the +X side tab group 118.

For description, FIG. 4 depicts a thick line of a creepage path C between the +Z side surface of the first metal protrusion 212b and the +X side surface of the first voltage detection terminal 132. The increase in the total length of the creepage path C makes it easier to ensure the electrical insulation between the first voltage detection terminal 132 and the first metal portion 212. The creepage path C shown in FIG. 4 is along the -X side surface of the first fireproof sheet 216a between the +Z side surface of the first metal protrusion 212b and the -Z side surface of the second resin protrusion 214c and is along the -Z side surface of the second resin protrusion 214c between the -X side surface of the first fireproof sheet 216a and the +X side surface of the first voltage detection terminal 132. As shown in FIG. 4, a part of the creepage path C is formed in a space between the -X side end of the -Z side surface of the second resin protrusion 214c and the +X side surface of the first voltage detection terminal 132. The reason why the part of the creepage path C is formed in the space is that the -X side surface of the second resin protrusion 214c is located close to the +X side surface of the first voltage detection terminal 132, as compared to the -X side surface of the first resin plate 214a and the -X side surface of the first fireproof sheet 216a. That is, a position where discharge occurs in a space between the insulating portion including the first resin portion 214 and the first fireproof portion 216 and the conductive portion including the +X side tab group 118 and the first voltage detection terminal 132 can be adjusted according to the position of the second resin protrusion 214c in the Z direction.

The first voltage detection terminal 132 is movable in the X direction. In the example shown in FIG. 4, the +X side surface of the first voltage detection terminal 132 and the -X side surface of the second resin protrusion 214c face each other through a gap. However, the first voltage detection terminal 132 may move toward the +X side, and the +X side surface of the first voltage detection terminal 132 and the -X side surface of the second resin protrusion 214c may come into contact with each other.

In the example shown in FIG. 4, the second resin protrusion 214c protrudes toward the first voltage detection terminal 132. Therefore, in the example shown in FIG. 4, even if the first voltage detection terminal 132 moves toward the +X side, the movement of the first voltage detection terminal 132 toward the +X side can be restricted by the contact between the -X side surface of the second resin protrusion 214c and the +X side surface of the first voltage detection terminal 132. Therefore, in the example shown in FIG. 4, a distance between the -X side surface of the first fireproof sheet 216a and the +X side surface of the first voltage detection terminal 132 can be easily ensured as compared to a case where the second resin protrusion 214c is not provided. Therefore, in the example shown in FIG. 4, the electrical insulation between the first voltage detection terminal 132 and the first metal portion 212 can be ensured as compared to a case where the second resin protrusion 214c is not provided.

In the example shown in FIG. 4, the second resin protrusion 214c protrudes toward a portion of the first voltage detection terminal 132 located offset from the -Z side end of the first voltage detection terminal 132 toward the center of the first voltage detection terminal 132. That is, the distance in the Z direction between the -Z side surface of the second resin protrusion 214c and the +Z side surface of the sixth plate 260 is longer than the distance in the Z direction between the -Z side end of the first voltage detection terminal 132 and the +Z side surface of the sixth plate 260. Therefore, in the example shown in FIG. 4, a creepage path along the -Z side surface of the second resin protrusion 214c can be formed at the position farther from the +Z side surface of the first metal protrusion 212b toward the +Z side as compared to a case where the -Z side end of the second resin protrusion 214c and the -Z side end of the first voltage detection terminal 132 overlap in the X direction. In the example shown in FIG. 4, accordingly, a creepage path along the -X side surface of the first fireproof sheet 216a between the on the +Z side surface of the first metal protrusion 212b and the -Z side surface of the second resin protrusion 214c can be longer than when the -Z side end of the second resin protrusion 214c and the -Z side end of the first voltage detection terminal 132 overlap in the X direction.

In the example shown in FIG. 4, the second resin protrusion 214c protrudes toward a portion of the first voltage detection terminal 132 that is located relatively close to the -Z side end of the first voltage detection terminal 132. Specifically, the second resin protrusion 214c protrudes toward a portion of the first voltage detection terminal 132 that is positioned between the -Z side end of the first voltage detection terminal 132 and the -Z side end of the +X side tab group 118. Therefore, the movement of the -Z side end of the first voltage detection terminal 132 toward the +X side can be easily restricted by the first voltage detection terminal 132 as compared to a case where the second resin protrusion 214c protrudes toward a portion of the first voltage detection terminal 132 that is positioned relatively far from the -Z side end of the first voltage detection terminal 132 . Therefore, the discharge in the space between the -Z side end of the first voltage detection terminal 132 and the -X side surface of the first fireproof sheet 216a can be easily suppressed as compared to a case where the second resin protrusion 214c protrudes toward a portion of the first voltage detection terminal 132 that is positioned relatively far from the -Z side end of the first voltage detection terminal 132.

In the example shown in FIG. 4, the thickness of the first resin portion 214 in the X direction is partially increased by the second resin protrusion 214c. Therefore, the movement of the first voltage detection terminal 132 toward the +X side can be restricted without increasing the thickness of the first resin portion 214 in the X direction over the entire first resin portion 214. When the thickness of the first resin portion 214 in the X direction is thick over the entire first resin portion 214, the stress of the warping of the first resin portion 214 is relatively large, and the influence of the stress of the warping of the first resin portion 214 on the member around the first resin portion 214 is relatively large. On the other hand, in the example shown in FIG. 4, the thickness of the first resin portion 214 in the X direction can be made relatively thin except for the second resin protrusion 214c. Therefore, the influence of the stress of the warping of the first resin portion 214 on the member around the first resin portion 214 can be reduced as compared to a case where the thickness of the first resin portion 214 in the X direction is thick over the entire first resin portion 214.

In the example shown in FIG. 4, the short-circuit between the conductive portion including the first metal portion 212 and the conductive portion including the first voltage detection terminal 132 and the +X side tab group 118 through the creepage path C of the insulating portion including the first resin plate 214a and the first fireproof sheet 216a is suppressed by the second resin protrusion 214c. However, a structure in which the protrusion corresponding to the second resin protrusion 214c is applied is not limited to the example shown in FIG. 4. For example, the protrusion may protrude toward the +X side tab group 118 instead of the first voltage detection terminal 132.

In the embodiment, the output terminal of each battery cell 110 is the positive electrode tab 114 or the negative electrode tab 116. A potential of the battery element included in the battery cell 110 is output from the output terminal of each battery cell 110. However, the output terminal of each battery cell 110 is not limited to the tab such as the positive electrode tab 114 and the negative electrode tab 116.

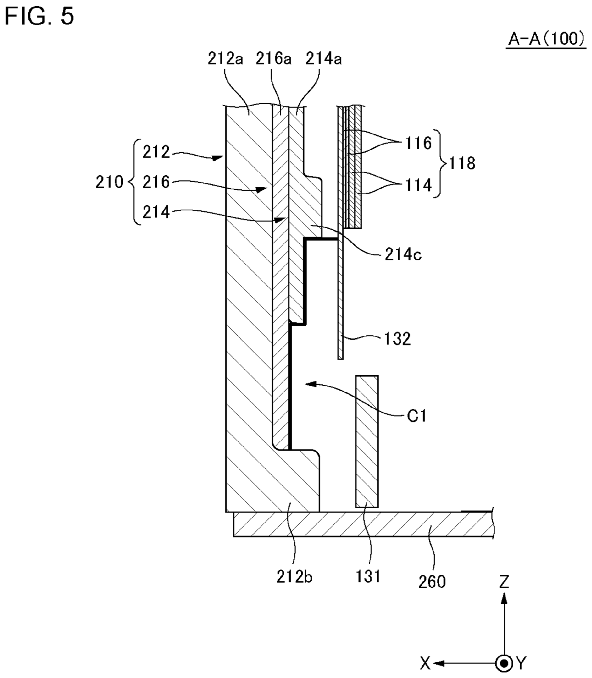

FIG. 5 is a diagram showing first variant of FIG. 4.

The creepage path C1 shown in FIG. 5 is along the -X side surface of the first fireproof sheet 216a, the -Z side surface of the first resin plate 214a, and the -X side surface of the first resin plate 214a between the +Z side surface of the first metal protrusion 212b and the -Z side surface of the second resin protrusion 214c and is along the -Z side surface of the second resin protrusion 214c between the -X side surface of the first fireproof sheet 216a and the +X side surface of the first voltage detection terminal 132.

In the example shown in FIG. 5, the second resin protrusion 214c protrudes toward the first voltage detection terminal 132 as in the example shown in FIG. 4. Therefore, in the example shown in FIG. 5, even if the first voltage detection terminal 132 moves toward the +X side, the movement of the first voltage detection terminal 132 toward the +X side can be restricted by the contact between the -X side surface of the second resin protrusion 214c and the +X side surface of the first voltage detection terminal 132. Therefore, in the example shown in FIG. 5, as in the example shown in FIG. 4, the electrical insulation between the first voltage detection terminal 132 and the first metal portion 212 can be ensured as compared to a case where the second resin protrusion 214c is not provided.

In the example shown in FIG. 5, the second resin protrusion 214c protrudes toward a portion of the first voltage detection terminal 132 located offset from the -Z side end of the first voltage detection terminal 132 toward the center of the first voltage detection terminal 132 as in the example shown in FIG. 4. Therefore, in the example shown in FIG. 5, as in the example shown in FIG. 4, a creepage path along the -X side surface of the first fireproof sheet 216a between the +Z side surface of the first metal protrusion 212b and the -Z side surface of the second resin protrusion 214c can be longer than when the -Z side end of the second resin protrusion 214c and the -Z side end of the first voltage detection terminal 132 overlap in the X direction.

In the example shown in FIG. 5, the second resin protrusion 214c protrudes toward a portion of the first voltage detection terminal 132 that is positioned relatively far from the -Z side end of the first voltage detection terminal 132. Specifically, the second resin protrusion 214c and the +X side tab group 118 partially overlap each other in the X direction. Therefore, a creepage path along the -X side surface of the first fireproof sheet 216a, the -Z side surface of the first resin plate 214a, and the -X side surface of the first resin plate 214a between the +Z side surface of the first metal protrusion 212b and the -Z side surface of the second resin protrusion 214c can be lengthened as compared to a case where the second resin protrusion 214c protrudes toward a portion of the first voltage detection terminal 132 that is located relatively close to the -Z side end of the first voltage detection terminal 132.

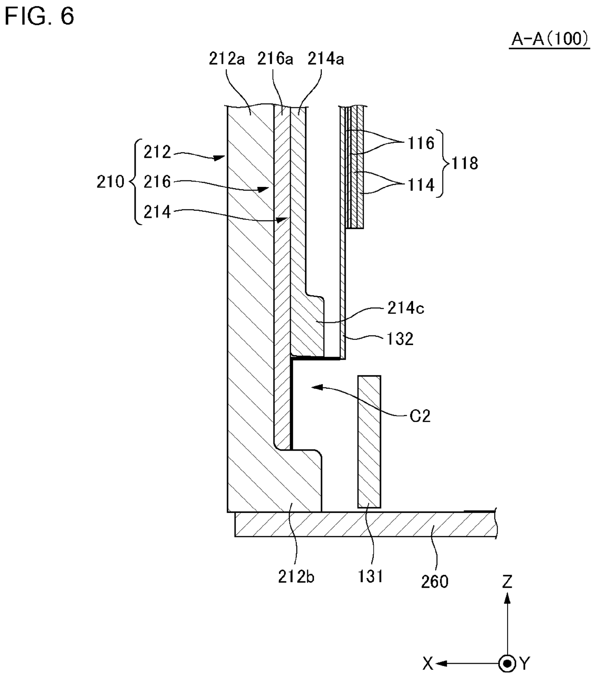

FIG. 6 is a diagram showing a second variant of FIG. 4.

The creepage path C2 shown in FIG. 6 is along the -X side surface of the first fireproof sheet 216a between the +Z side surface of the first metal protrusion 212b and the -Z side surface of the second resin protrusion 214c and is along the -Z side surface of the second resin protrusion 214c between the -X side surface of the first fireproof sheet 216a and the +X side surface of the first voltage detection terminal 132.

In the example shown in FIG. 6, the second resin protrusion 214c protrudes toward the first voltage detection terminal 132 as in the example shown in FIG. 4. Therefore, in the example shown in FIG. 6, even if the first voltage detection terminal 132 moves toward the +X side, the movement of the first voltage detection terminal 132 toward the +X side can be restricted by the contact between the -X side surface of the second resin protrusion 214c and the +X side surface of the first voltage detection terminal 132. Therefore, in the example shown in FIG. 6, as in the example shown in FIG. 4, the electrical insulation between the first voltage detection terminal 132 and the first metal portion 212 can be ensured as compared to a case where the second resin protrusion 214c is not provided.

In the example shown in FIG. 6, the -Z side end of the second resin protrusion 214c and the -Z side end of the first voltage detection terminal 132 overlap in the X direction. Therefore, the movement of the -Z side end of the first voltage detection terminal 132 toward the +X side can be easily restricted as compared to a case where the second resin protrusion 214c protrudes toward a portion of the first voltage detection terminal 132 located offset from the -Z side end of the first voltage detection terminal 132 toward the center of the first voltage detection terminal 132.

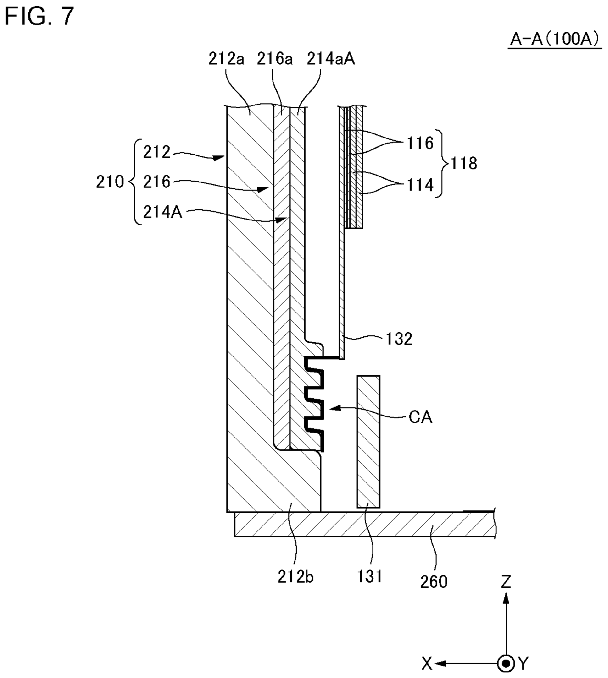

FIG. 7 is a cross-sectional view of a part of a battery module 100A according to the variant. A-A cross section shown in FIG. 7 according to the variant is a cross section corresponding to the A-A cross section of FIG. 4 according to the embodiment. The battery module 100A according to the variant is the same as the battery module 100 according to the embodiment except for the following points.

As shown in FIG. 7, the -X side surface of a first resin portion 214A of the -Z side end portion of a first resin plate 214aA according to the variant includes an uneven surface between the +Z side surface of the first metal protrusion 212b and the +X side surface of the first voltage detection terminal 132. For description, a creepage path CA is shown by a thick line in FIG. 7. As shown by the creepage path CA, in the example shown in FIG. 7, the total length of the creepage path CA can be lengthened as compared to a case where the -X side surface of the -Z side end portion of the first resin plate 214aA is a flat surface perpendicular to the X direction. Therefore, the electrical insulation between the first voltage detection terminal 132 and the first metal portion 212 can be ensured as compared to a case where the -X side surface of the -Z side end portion of the first resin plate 214aA is a flat surface perpendicular to the X direction. A shape of the uneven surface is not particularly limited as long as the total length of the creepage path CA between the +Z side surface of the first metal protrusion 212b and the +X side surface of the first voltage detection terminal 132 can be lengthened.

Although the embodiments and variants of the present invention have been described above with reference to the accompanying drawings, these are merely examples of the present invention, and various other configurations may be employed.

This application claims priority based on Japanese Patent Application No. 2023-172623 filed on October 04, 2023, and the disclosure of which is incorporated herein in its entirety by reference.

### REFERENCE SIGNS LIST

100, 100A battery module, 110 battery cell, 112 exterior material, 114 positive electrode tab, 116 negative electrode tab, 118 tab group, 120 compression pad, 130 first voltage detection device, 131 first protector, 131a first opening, 132 first voltage detection terminal, 133 first voltage detection line, 134 first connector, 135 first bus bar, 140 second voltage detection device, 141 second protector, 141a second opening, 142 second voltage detection terminal, 143 second voltage detection line, 144 second connector, 145 second bus bar, 200 accommodating body, 210 first plate, 212 first metal portion, 212a first metal plate, 212a1 first notch, 212a2 second notch, 212b first metal protrusion, 212c second metal protrusion, 214, 214A first resin portion, 214a, 214aA first resin plate, 214b first resin protrusion, 214c second resin protrusion, 216 first fireproof portion, 216a first fireproof sheet, 216b1 first fireproof extending sheet, 216b2 second fireproof extending sheet, 220 second plate, 230 third plate, 240 fourth plate, 250 fifth plate, 260 sixth plate, 270 thermally conductive adhesive, C, C1, C2, CA creepage path

## Claims

1. A battery module comprising:
a battery cell including an output terminal; and
an accommodating body that accommodates the battery cell,
wherein the accommodating body includes a first conductive portion and an insulating portion that is at least partially located between the battery cell and the first conductive portion, and
wherein the insulating portion includes a protrusion that protrudes toward a second conductive portion including at least one of the output terminal and a conductive member electrically connected to the output terminal.

2. The battery module according to claim 1, wherein the protrusion protrudes toward a portion of the second conductive portion located offset from an end of the second conductive portion toward a center of the second conductive portion.

3. The battery module according to claim 1 or 2, wherein the insulating portion includes a resin portion including the protrusion and a heat-resistant portion located between the first conductive portion and the resin portion.

4. The battery module according to any one of claims 1 to 3, wherein the second conductive portion includes a voltage detection terminal electrically connected to the output terminal.

5. A battery module comprising:
a battery cell including an output terminal; and
an accommodating body that accommodates the battery cell,
wherein the accommodating body includes a first conductive portion and an insulating portion that is at least partially located between the battery cell and the first conductive portion, and
wherein the insulating portion includes an uneven surface located between the first conductive portion and a second conductive portion including at least one of the output terminal and a conductive member electrically connected to the output terminal.

6. The battery module according to claim 5, wherein the insulating portion includes a resin portion including the uneven surface and a heat-resistant portion located between the first conductive portion and the resin portion.

7. The battery module according to claim 5 or 6, wherein the second conductive portion includes a voltage detection terminal electrically connected to the output terminal.
